# EUROPEAN PATENT APPLICATION

(11) **EP 3 310 109 A1**
(43) Date of publication of application: **18.04.2018**
(21) Application number: 16806619.9
(22) Date of filing: 25.04.2016
(51) Int. Cl.: H04W 72/04, H04W 76/02

(54) **SMALL CELL RESOURCE CONFIGURATION METHOD AND DEVICE FOR A WIRELESS MOBILE NETWORK**

(30) Priority: 10.06.2015 CN 201510316621
(71) Applicant: CHINA ACADEMY OF TELECOMMUNICATIONS TECHNOLOGY, Haidian District, Beijing 100191 (CN)
(72) Inventor: QUAN, Haiyang, Beijing 100191 (CN); XU, Fangli, Beijing 100191 (CN); LIU, Jiamin, Beijing 100191 (CN)
(74) Representative: Körfer, Thomas
(86) International application number: PCT/CN2016/080136
(87) International publication number: WO 2016/197721

(57) **Abstract**

A small cell resource configuration method and device for a wireless mobile network. The method comprises: receiving an access request initiated by a terminal and a measurement result of a small cell reported by the terminal, wherein the measurement result is obtained by measuring the small cell before the terminal initiates the access request; determining the small cell which serves the terminal according to the measurement result of the small cell; and configuring a transmission resource on the determined small cell for the terminal, or receiving an access request initiated by a terminal on a frequency point of a small cell, and configuring a transmission resource on the small cell for the terminal. Since small cell information is broadcast in a macro cell, a terminal can measure a small cell according to the received small cell information before initiating an access request, instead of performing measurement during an access process. Therefore, signalling interaction of configuring a transmission resource of a small cell for a terminal during an access process is reduced, thereby achieving the purpose of enabling the terminal to use the transmission resource of the small cell as soon as possible.

## Description

This application claims the benefit of Chinese Patent Application No. 201510316621.5, filed with the Chinese Patent Office on June 10, 2015 and entitled "Method and apparatus for configuring a small cell resource in a wireless mobile network", which is hereby incorporated by reference in its entirety.

### Field

The present invention relates to the field of communications, and particularly to a method and apparatus for configuring a small cell resource in a wireless mobile network.

### Background

A large number of small cells will be deployed in a future 5G system. A small cell generally refers to a cell with low transmitted power. The small cell is described as follows in 3GPP TR 36.932.

Small cells using low power nodes are considered promising to cope with mobile traffic explosion, especially for hotspot deployments in indoor and outdoor scenarios. A low-power node generally means a node whose Tx power is lower than macro node and BS classes, for example Pico and Femto eNB are both applicable. Small cell enhancements for E-UTRA and E-UTRAN will focus on additional functionalities for enhanced performance in hotspot areas for indoor and outdoor using low power nodes.

In view of the interference problem, a large number of small cells may be affiliated to a macro cell with a large coverage area, or virtualized into a cell. These small cells do not exist as independent small cells.

There has been absent so far a satisfactory solution to how to enable a terminal to access a transmission resource of a small cell affiliated to a macro cell with a large coverage area as soon as possible.

### Summary

Embodiments of the invention provide a method and apparatus for configuring a small cell resource in a wireless mobile network so as to address the technical problem of how to enable a terminal to access a transmission resource of a small cell affiliated to a macro cell with a large coverage area as soon as possible.

An embodiment of the invention provides a method for configuring a small cell resource in a wireless mobile network, where the method includes:
receiving an access request initiated by a terminal, and a measurement result of small cells reported by the terminal, where the measurement result of the small cells is determined by the terminal by measuring the small cells according to information about the small cells broadcasted in a macro cell, before the terminal initiates the access request;
determining small cells for serving the terminal according to the measurement result of the small cells; and
configuring transmission resources in the determined small cell for the terminal.

Where the information about the small cells includes frequency information of the small cells.

Furthermore the information about the small cells further includes at least one of: identity information of the small cells, and access resource configuration information of the small cells.

Further to any one of the embodiments above of the method, optionally the determining the small cells for serving the terminal, according to the measurement result of the small cells includes:
selecting a predetermined number of small cells as the small cells for serving the terminal, in a descending order of qualities of the small cells indicated by the measurement result of the small cells; or
selecting a predetermined number of small cells as the small cells for serving the terminal, according to qualities of the small cells indicated by the measurement result of the small cells, and positions of the small cells.

Further to any one of the embodiments above of the method, optionally the method further includes: broadcasting the information about the small cells in the macro cell at a fixed or non-fixed period.

An embodiment of the invention provides a method for configuring a small cell resource in a wireless mobile network, where the method includes:
initiating an access request to a base station, and reporting a measurement result of small cells determined by measuring the small cells according to information about the small cells broadcasted by the base station in a macro cell before the access request is initiated; and
obtaining configuration information of a transmission resource in a small cell for serving the terminal determined by the base station.

Where the information about the small cells includes frequency information of the small cells.

Furthermore the information about the small cells further includes at least one of: identity information of the small cells, and access resource configuration information of the small cells.

Further to any one of the embodiments above of the method, optionally the reporting to the base station the measurement result of the small cells determined by measuring the small cells according to the information about the small cells broadcasted in the macro cell before the access request is initiated includes:
reporting, to the base station, information about a predetermined number of small cells selected in a descending order of qualities of the small cells, where the qualities of the small cells are indicated by the measurement result obtained by measuring the small cells according to the information about the small cells broadcasted in the macro cell before the access request is initiated; or
reporting, to the base station, the measurement result of all the small cells determined by measuring the small cells according to the information about the small cells broadcasted in the macro cell before the access request is initiated.

Further to any one of the embodiments above of the method, optionally the method further includes:
receiving the information about the small cells broadcasted in the macro cell at a fixed or non-fixed period, and measuring the small cells according to the information about the small cells received each time, where what is reported is a measurement result of a latest measuring of the small cells.

An embodiment of the invention provides a method for configuring a small cell resource in a wireless mobile network, where the method includes:
receiving an access request initiated by a terminal at a frequency of a small cell, where the small cell is determined by the terminal by measuring small cells according to information about the small cells broadcasted in a macro cell before the access request is initiated; and
configuring a transmission resource in the small cell for the terminal.

Where the information about the small cells includes frequency information of the small cells, and access resource configuration information of the small cells.

Furthermore the information about the small cells may further include identity information of the small cells.

Further to any one of the embodiments above of the method, optionally the method further includes:
broadcasting the information about the small cells in the macro cell at a fixed or non-fixed period.

An embodiment of the invention provides a method for configuring a small cell resource in a wireless mobile network, where the method includes:
initiating an access request to a base station at a frequency of a small cell, where the small cell is determined by measuring small cells according to information about the small cells broadcasted in a macro cell before the access request is initiated; and
obtaining configuration information of a transmission resource in the small cell.

Where the information about the small cells includes frequency information of the small cells, and access resource configuration information of the small cells.

Furthermore the information about the small cells may further include identity information of the small cells.

Further to any one of the embodiments above of the method, optionally the small cell is a small cell with a highest quality determined after measuring the small cells according to the information about the small cells broadcasted in the macro cell of the base station before the access request is initiated.

Further to any one of the embodiments above of the method, optionally the method further includes:
receiving the information about the small cells broadcasted in the macro cell at a fixed or non-fixed period, and measuring the small cells according to the information about the small cells received each time, where the small cell is determined according to a latest measurement.

Based upon the same inventive idea as the method, an embodiment of the invention further provides an apparatus for configuring a small cell resource in a wireless mobile network, where the apparatus includes:
an access request and measurement result receiving module configured to receive an access request initiated by a terminal, and a measurement result of small cells reported by the terminal, where the measurement result of the small cells is determined by the terminal by measuring the small cells according to information about the small cells broadcasted in a macro cell, before the terminal initiates the access request;
a serving small cell determining module configured to determine small cells for serving the terminal, according to the measurement result of the small cells; and
a small cell resource configuring module configured to configure transmission resources in the determined small cells for the terminal.

Where the information about the small cells includes frequency information of the small cells.

Further to any one of the embodiments above of the apparatus, optionally the serving small cell determining module is configured to:
select a predetermined number of small cells as the small cells for serving the terminal, in a descending order of qualities of the small cells indicated by the measurement result of the small cells; or
select a predetermined number of small cells as the small cells for serving the terminal, according to qualities of the small cells indicated by the measurement result of the small cells, and positions of the small cells.

Further to any one of the embodiments above of the apparatus, optionally the apparatus further includes a broadcasted information transmitting module configured to:
transmit the information about the small cells in the macro cell at a fixed or non-fixed period.

Based upon the same inventive idea as the method, an embodiment of the invention further provides a base station including a processor, a memory, and a transceiver, where:
the processor is configured to read programs in the memory to:
   receive an access request initiated by a terminal, and a measurement result of small cells reported by the terminal, through the transceiver, where the measurement result of the small cells is determined by the terminal measuring the small cells according to information about the small cells broadcasted in a macro cell, before the terminal initiates the access request;
   determine small cells for serving the terminal according to the measurement result of the small cells; and
   configure transmission resources in the determined small cells for the terminal;
   the transceiver is configured to be controlled by the processor to receive and transmit data; and
   the memory is configured to store data used by the processor to perform operations.

Where the information about the small cells includes frequency information of the small cells.

Further to any one of the embodiments above of the base station, optionally the processor configured to determine the small cells for serving the terminal, according to the measurement result of the small cells is configured to:
select a predetermined number of small cells as the small cells for serving the terminal, in a descending order of qualities of the small cells indicated by the measurement result of the small cells; or
select a predetermined number of small cells as the small cells for serving the terminal, according to qualities of the small cells indicated by the measurement result of the small cells, and positions of the small cells.

Further to any one of the embodiments above of the base station, optionally the processor is further configured to read the programs in the memory to:
broadcast the information about the small cells in the macro cell at a fixed or non-fixed period.

Based upon the same inventive idea as the method, an embodiment of the invention further provides an apparatus for configuring a small cell resource in a wireless mobile network, where the apparatus includes:
an access request and measurement result transmitting module configured to initiate an access request to a base station, and report a measurement result of small cells determined by measuring the small cells according to information about the small cells broadcasted by the base station in a macro cell before the access request is initiated; and
a small cell resource configuration obtaining module configured to obtain configuration information of transmission resources in small cella for serving the terminal determined by the base station.

Where the information about the small cells includes frequency information of the small cells.

Further to any one of the embodiments above of the apparatus, optionally the access request and measurement result transmitting module configured to report to the base station the measurement result of the small cells determined by measuring the small cells according to the information about the small cells broadcasted in the macro cell before the access request is initiated, is configured to:
report, to the base station, information about a predetermined number of small cells selected in a descending order of qualities of the small cells, where the qualities of the small cells are indicated by the measurement result obtained by measuring the small cells according to the information about the small cells broadcasted in the macro cell before the access request is initiated; or
report, to the base station, the measurement result of all the small cells determined by measuring the small cells according to the information about the small cells broadcasted in the macro cell before the access request is initiated.

Further to any one of the embodiments above of the apparatus, optionally the apparatus further includes a broadcasted information receiving and measuring module configured to:
receive the information about the small cells broadcasted in the macro cell at a fixed or non-fixed period, and measure the small cells according to the information about the small cells received each time, where what is reported is a measurement result of a latest measuring of the small cells.

Based upon the same inventive idea as the method, an embodiment of the invention further provides a terminal including a processor, a memory, and a transceiver, where:
the processor is configured to read programs in the memory to:
   initiate an access request to a base station, and to report a measurement result of small cells determined by measuring the small cells according to information about the small cells broadcasted by the base station in a macro cell before the access request is initiated, through the transceiver; and
   obtain configuration information of transmission resources in small cells for serving the terminal determined by the base station, through the transceiver;
   the transceiver is configured to be controlled by the processor to receive and transmit data; and
   the memory is configured to store data used by the processor to perform operations.

Where the information about the small cells includes frequency information of the small cells.

Further to any one of the embodiments above of the terminal, optionally the processor configured to report to the base station the measurement result of the small cells determined by measuring the small cells according to the information about the small cells broadcasted in the macro cell before the access request is initiated, is configured to read programs from the memory to:
report, to the base station, information about a predetermined number of small cells selected in a descending order of qualities of the small cells, where the qualities of the small cells are indicated by the measurement result obtained by measuring the small cells according to the information about the small cells broadcasted in the macro cell before the access request is initiated; or
report, to the base station, the measurement result of all the small cells determined by measuring the small cells according to the information about the small cells broadcasted in the macro cell before the access request is initiated.

Further to any one of the embodiments above of the terminal, optionally the processor is further configured to read the programs in the memory to: receive the information about the small cells broadcasted in the macro cell at a fixed or non-fixed period through the transceiver, and measure the small cells according to the information about the small cells received each time, where what is reported is a measurement result of a latest measuring of the small cells.

Based upon the same inventive idea as the method, an embodiment of the invention further provides an apparatus for configuring a small cell resource in a wireless mobile network, where the apparatus includes:
an access request receiving module configured to receive an access request initiated by a terminal at a frequency of a small cell, where the small cell is determined by the terminal by measuring small cells according to information about the small cells broadcasted in a macro cell before the access request is initiated; and
a small cell resource configuring module configured to configure a transmission resource in the small cell for the terminal.

Where the information about the small cells includes frequency information of the small cells, and access resource configuration information of the small cells.

Further to any one of the embodiments above of the apparatus, optionally the apparatus further includes a broadcasted information transmitting module configured to:
broadcast the information about the small cells in the macro cell at a fixed or non-fixed period.

Based upon the same inventive idea as the method, an embodiment of the invention further provides a base station including a processor, a memory, and a transceiver, where:
the processor is configured to read programs in the memory to:
   receive through the transceiver an access request initiated by a terminal at a frequency of a small cell, where the small cell is determined by the terminal measuring small cells according to information about the small cells broadcasted in a macro cell before the access request is initiated; and
   configure a transmission resource in the small cell for the terminal; and
   the transceiver is configured to be controlled by the processor to receive and transmit data; and
   the memory is configured to store data used by the processor to perform operations.

Where the information about the small cells includes frequency information of the small cells, and access resource configuration information of the small cells.

Further to any one of the embodiments above of the base station, optionally the processor is further configured to read programs in the memory to:
broadcast the information about the small cells in the macro cell at a fixed or non-fixed period through the transceiver.

Based upon the same inventive idea as the method, an embodiment of the invention further provides an apparatus for configuring a small cell resource in a wireless mobile network, where the apparatus includes:
an access request transmitting module configured to initiate an access request to a base station at a frequency of a small cell, where the small cell is determined by the terminal measuring small cells according to information about the small cells broadcasted in a macro cell before the access request is initiated; and
a small cell resource configuration obtaining module configured to obtain configuration information of a transmission resource in the small cell.

Where the information about the small cells includes frequency information of the small cells, and access resource configuration information of the small cells.

Further to any one of the embodiments above of the apparatus, optionally the small cell is a small cell with a highest quality determined after measuring the small cells according to the information about the small cells broadcasted in the macro cell of the base station before the access request is initiated.

Further to any one of the embodiments above of the apparatus, optionally the apparatus further includes a broadcasted information receiving and measuring module configured to:
receive the information about the small cells broadcasted in the macro cell at a fixed or non-fixed period, and measure the small cells according to the information about the small cells received each time, where the small cell is determined according to a latest measurement.

Based upon the same inventive idea as the method, an embodiment of the invention further provides a terminal a processor, a memory, and a transceiver, where:
the processor is configured to read programs in the memory to:
   initiate through the transceiver an access request to a base station at a frequency of a small cell, where the small cell is determined by the terminal measuring small cells according to information about the small cells broadcasted in a macro cell before the access request is initiated; and
   obtain configuration information of a transmission resource in the small cell;
   the transceiver is configured to be controlled by the processor to receive and transmit data; and
   the memory is configured to store data used by the processor to perform operations.

Where the information about the small cells includes frequency information of the small cells, and access resource configuration information of the small cells.

Further to any one of the embodiments above of the terminal, optionally the small cell is a small cell with a highest quality determined after measuring the small cells according to the information about the small cells broadcasted in the macro cell of the base station before the access request is initiated.

Further to any one of the embodiments above of the terminal, optionally the processor is further configured to read programs in the memory to:
receive the information about the small cells broadcasted in the macro cell at a fixed or non-fixed period, and measure the small cells according to the information about the small cells received each time, where the small cell is determined according to a latest measurement.

In the technical solutions according to the embodiments of the invention, since the information about the small cells is broadcasted in the macro cell, the terminal may measure the small cells according to the received information about the small cells before initiating the access request, instead of measuring during an access, thus signaling interactions for configuring a transmission resource of the small cell during the access are reduced, thereby realizing the purpose of enabling the terminal to access he transmission resource of the small cell as soon as possible so as to offload the terminal to the small cell as soon as possible, thus effectively economizing a resource of the macro cell.

### Brief Description of the Drawings

Fig.1 is a flow chart of a first method according to an embodiment of the invention.
Fig.2 is a flow chart of a second method according to an embodiment of the invention.
Fig.3 is a schematic diagram of a network architecture including small cells affiliated to a macro cell according to an embodiment of the invention.
Fig.4 is a signaling diagram of a method according to an embodiment of the invention.
Fig.5 is a signaling diagram of a method according to another embodiment of the invention.
Fig.6 is a flow chart of a third method according to an embodiment of the invention.
Fig.7 is a flow chart of a fourth method according to an embodiment of the invention.
Fig.8 is a signaling diagram of a method according to a further embodiment of the invention.
Fig.9 is a schematic diagram of a first apparatus according to an embodiment of the invention.
Fig.10 is a schematic diagram of a second apparatus according to an embodiment of the invention.
Fig.11 is a schematic diagram of a third apparatus according to an embodiment of the invention.
Fig.12 is a schematic diagram of a fourth apparatus according to an embodiment of the invention.
Fig.13 is a schematic structural diagram of a base station according to an embodiment of the invention.
Fig.14 is a schematic structural diagram of a terminal according to an embodiment of the invention.

### Detailed Description of the Embodiments

The embodiments of the invention will be described below in details with reference to the drawings.

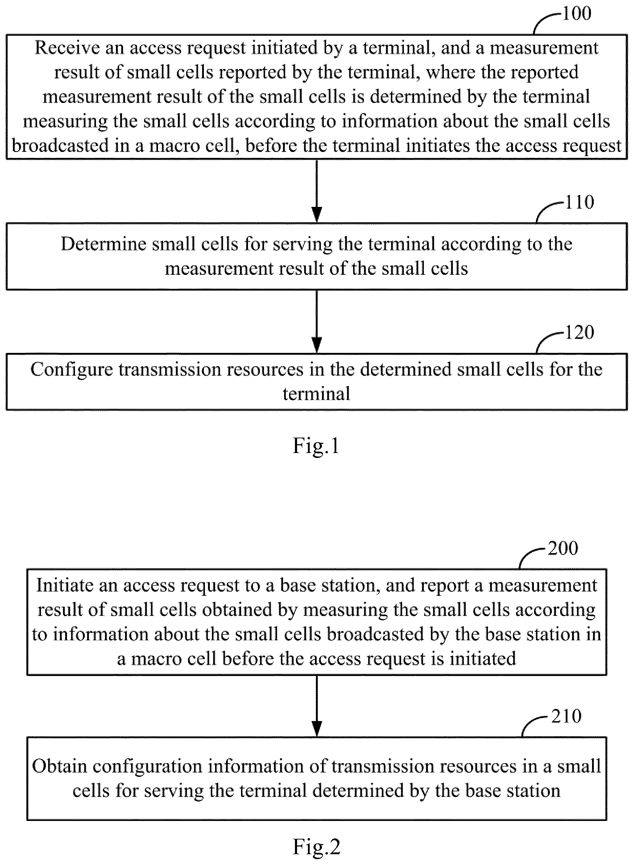

Fig.1 illustrates a method for configuring a small cell resource in a wireless mobile network according to an embodiment of the invention, which includes the following operations.

Operation 100: receiving an access request initiated by a terminal, and a measurement result of small cells reported by the terminal, where the reported measurement result of the small cells is determined by the terminal by measuring the small cells according to information about the small cells broadcasted in a macro cell, before the terminal initiates the access request.

In this embodiment, the measurement result of the small cells may be carried in the access request for reporting, or may be carried in a different message from the access request for reporting.

In this embodiment, the small cells are small cells affiliated to the above macro cell.

Operation 110: determining small cells for serving the terminal according to the measurement result of the small cells.

Operation 120: configure transmission resources in the determined small cells for the terminal.

This embodiment may be implemented at the base station side.

In the technical solution according to the embodiment of the invention, since the information about the small cells is broadcasted in the macro cell, the terminal may measure the small cells according to the received information about the small cells before initiating an access request, instead of measuring during an access, thus signaling interactions for configuring a transmission resource of the small cell during the access are reduced, thereby realizing the purpose of enabling the terminal to access the transmission resources of the small cells as soon as possible so as to offload the terminal to the small cell as soon as possible, thus effectively economizing a resource of the macro cell.

Here the information about the small cells may include frequency information of the small cells.

In the embodiments of the invention, the frequency information of the small cells may be frequencies of the small cells, or may be frequency bands of the small cells.

Furthermore the information about the small cells may further include at least one of: identity information of the small cells, and access resource configuration information of the small cells.

Here the identity information of the small cells may be Physical Cell Identities (PCIs) of the small cells, or may be cell identities of the small cells.

Further to any one of the embodiments above of the method, optionally the operation 110 above of determining the small cell for serving the terminal according to the measurement result of the small cell may be performed in a number of specific implementations, for example, a predetermined number of small cells are selected as the small cells for serving the terminal, in a descending order of qualities of the small cells indicated by the measurement result of the small cells reported by the terminal. In another example, a predetermined number of small cells are selected as the small cells for serving the terminal, according to qualities of the small cells indicated by the measurement result of the small cells reported by the terminal, and positions of the small cells.

Further to any one of the embodiments above of the method, optionally the method may further include: broadcasting the information about the small cells in the macro cell at a fixed or non-fixed period.

Fig.2 illustrates a method for configuring a small cell resource in a wireless mobile network according to an embodiment of the invention, which includes the following operations.

Operation 200: initiating an access request to a base station, and reporting a measurement result of small cells obtained by measuring the small cells according to information about the small cells broadcasted by the base station in a macro cell before the access request is initiated.

In the embodiment of the invention, measuring the small cells may be but is not limited to that measuring qualities of the small cells, for example, measuring to obtain the Reference Signal Received Powers (RSRPs), Reference Signal Received Qualities (RSRQs), etc., of the small cells.

Operation 210: obtaining configuration information of transmission resources in small cells for serving a terminal determined by the base station.

This embodiment may be implemented at the terminal side.

In the technical solution according to the embodiment of the invention, since the information about the small cells is broadcasted in the macro cell, the terminal may measure the small cells according to the received information about the small cells before initiating the access request, instead of measuring during an access, thus signaling interactions for configuring a transmission resource of the small cell during the access are reduced, thereby realizing the purpose of enabling the terminal to access he transmission resource of the small cell as soon as possible so as to offload the terminal to the small cell as soon as possible, thus effectively economizing the resource of the macro cell.

Here the method may further include: receiving the information about the small cells broadcasted in the macro cell at a fixed or non-fixed period, and measuring the small cells according to the information about the small cells received each time, where what is reported is the measurement result of the latest measuring of the small cells.

In this embodiment, the broadcasted information about the small cells may include frequency information of the small cells. If the information about the small cells includes only the frequency information of the small cells, then frequencies of the small cells will be determined according to the frequency information of the small cells received each time, and the small cells will be measured by detecting blindly at the frequencies of the small cells.

Furthermore the information about the small cells may further include at least one of: identity information of the small cells, and access resource configuration information of the small cells. Accordingly the small cells may be determined according to these information, and the determined small cells may be measured at the frequencies of the small cells.

Further to any one of the embodiments above at the terminal side, optionally the measurement result of the small cells reported to the base station may be information about a predetermined number of small cells selected in a descending order of qualities of the small cells indicated by measurement values obtained by measuring the small cells according to the information about the small cells broadcasted in the macro cell before the access request is initiated. In this case, the information about the small cells is reported as the measurement result, where the reported information about the small cells may be but will not be limited to PCIs, frequency information, and/or cell identities of the small cells, or may be measurement values of a predetermined number of small cells selected in a descending order of their qualities, where the measurement values may be but will not be limited to RSRPs, RSRQs, etc. In the two cases above, the measurement result may be arranged in an order of the qualities, and then transmitted, or may be arranged randomly, and then transmitted. The information about the small cells may alternatively be measurement result of all the small cells determined by measuring the small cells (e.g., measurement values of all the small cells).

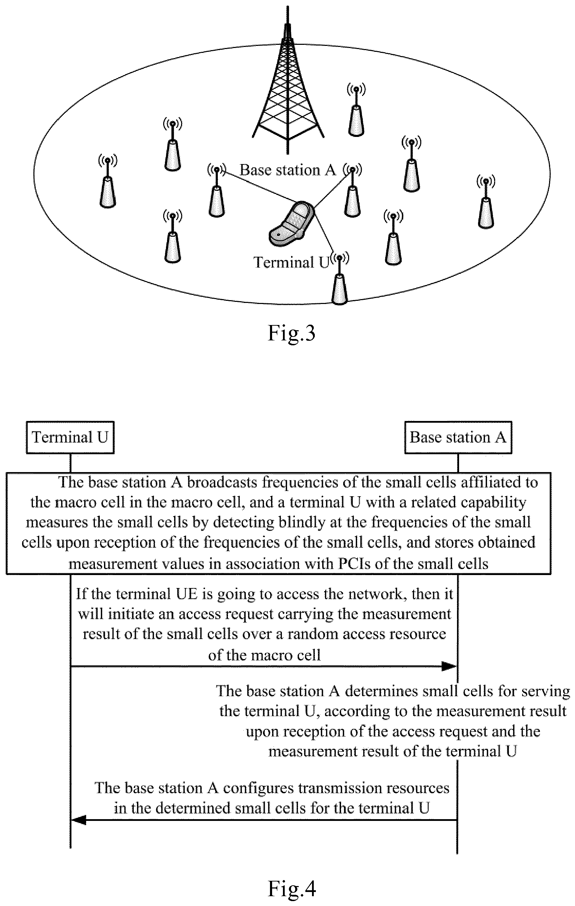

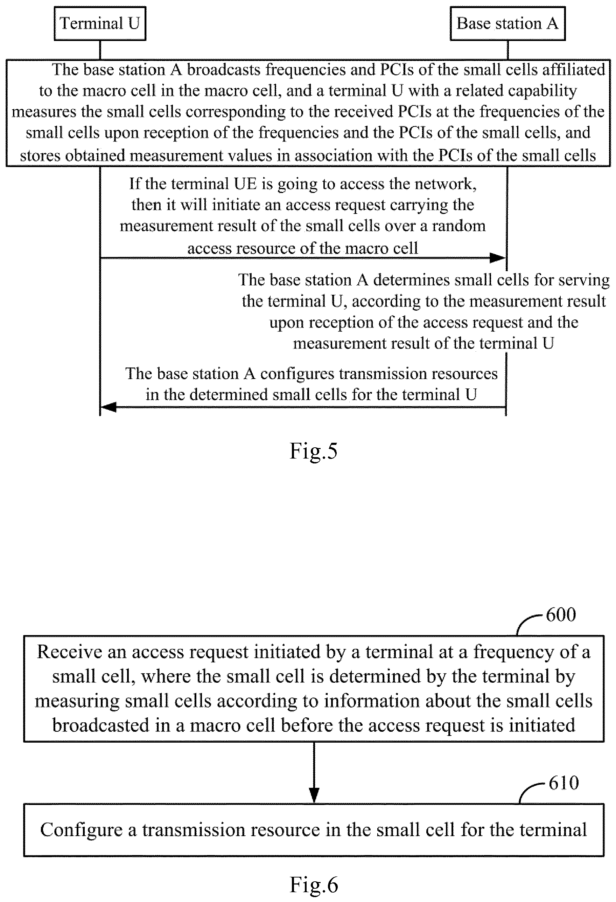

Taking a network architecture illustrated in Fig.3 as an example, there are several small cells affiliated to a macro cell of a base station A. In order to enable a terminal to access a transmission resource of a small cell as soon as possible, Fig.4 illustrates one embodiment thereof, and Fig.5 illustrates another embodiment thereof.

In the embodiment illustrated in Fig.4, specifically there may be the following operations.

The base station A broadcasts frequencies of the small cells affiliated to the macro cell in the macro cell. In this embodiment, the information about the small cells may be carried in system information for broadcasting. In this embodiment, the information about all the small cells affiliated to the macro cell may be broadcasted, or a part of the small cells may be selected under a predetermined rule, and the information about these small cells may be transmitted.

A terminal U with a related capability measures the small cells by detecting blindly at the frequencies of the small cells upon reception of the frequencies of the small cells, and stores obtained measurement values in association with PCIs of the small cells. In this embodiment, the terminal replaces the stored original measurement values of the same small cells after each measurement.

If the terminal UE is going to access the network, then it will initiate an access request carrying the measurement result of the small cells over a random access resource of the macro cell. In this embodiment, the terminal UE may report the obtained measurement values of all the small cells, and their PCIs to the base station A as the measurement result, or may select a part of the small cells (for example, select a predetermined number of small cells in a descending order of their qualities), and report their measurement values and PCIs to the base station A as the measurement result, or may select and sort a part of the small cells (for example, select a predetermined number of small cells in a descending order of their qualities, and sort them in an order of their qualities), and report their information to the base station as the measurement result.

The base station A determines small cells for serving the terminal U, according to the measurement result upon reception of the access request and the measurement result of the terminal U. In this embodiment, the base station A may select a predetermined number of small cells for serving the terminal U, in a descending order of their qualities; or may select a predetermined number of small cells for serving the terminal U, according to the qualities and positions of the small cells. For example, the base station selects a predetermined number (e.g., 3) of small cells, with both their qualities and positions from the terminal U meet a present condition, for serving the terminal U. In another example, the base station selects a predetermined number (e.g., 3) of small cells, with both their qualities and mutual positional relationships meet a present condition, for serving the terminal U.

The base station A configures transmission resources in the determined small cells for the terminal U, where configuring the transmission resources includes deciding on the transmission resources and transmitting configuration information.

The terminal U may transmit data over the corresponding transmission resources upon reception of the configuration information of the transmission resources in the small cells. For example, the terminal transmits data in a Carrier Aggregation (CA) or Coordinated Multi-Point (COMP) transmission and reception mode.

In the embodiment illustrated in Fig.5, specifically there may be the following operations.

The base station A broadcasts frequencies and PCIs of the small cells affiliated to the macro cell in the macro cell. In this embodiment, the information about the small cells may be carried in system information for broadcasting. In this embodiment, the information about all the small cells affiliated to the macro cell may be broadcasted, or a part of the small cells may be selected under a predetermined rule, and the information about these small cells may be transmitted.

A terminal U with a related capability measures the small cells corresponding to the received PCIs by detecting blindly at the frequencies of the small cells upon reception of the frequencies and the PCIs of the small cells, and stores obtained measurement values in association with the PCIs of the small cells. In this embodiment, the terminal replaces the stored original measurement values of the same small cells after each measurement. In this embodiment, the terminal stores only the measurement values above a preset threshold.

If the terminal UE is going to access the network, then it will initiate an access request carrying the measurement result of the small cells over a random access resource of the macro cell. In this embodiment, the terminal UE may report the stored measurement values and PCIs of all the small cells to the base station A as the measurement result, or may sort the small cells according to the stored measurement values of all the small cells, and then report the information about the sorted small cells to the base station A as the measurement result.

The base station A determines small cells for serving the terminal U, according to the measurement result upon reception of the access request and the measurement result of the terminal U. In this embodiment, the base station A may select a predetermined number of small cells for serving the terminal U, in a descending order of their qualities; or may select a predetermined number of small cells for serving the terminal U, according to the qualities and positions of the small cells. For example, the base station selects a predetermined number (e.g., 3) of small cells, with both their qualities and positions from the terminal U meet a present condition, for serving the terminal U. In another example, the base station selects a predetermined number (e.g., 3) of small cells, with both their qualities and mutual positional relationships meet a present condition, for serving the terminal U.

The base station A configures transmission resources in the determined small cells for the terminal U, where configuring the transmission resources includes deciding on the transmission resources and transmitting configuration information.

The terminal U may transmit data over the corresponding transmission resources upon reception of the configuration information of the transmission resources in the small cells. For example, the terminal transmits data in a CA or COMP transmission and reception mode.

An embodiment of the invention provides a method for configuring a small cell resource in a wireless mobile network as illustrated in Fig.6, where the method includes the following operations.

Operation 600: receiving an access request initiated by a terminal at a frequency of a small cell, where the small cell is determined by the terminal by measuring small cells according to information about the small cells broadcasted in a macro cell before the access request is initiated.

Operation 610: configuring a transmission resource in the small cell for the terminal.

In the technical solution according to the embodiment of the invention, since the information about the small cells is broadcasted in the macro cell, the terminal may measure the small cells according to the received information about the small cells before initiating the access request, instead of measuring during an access, thus signaling interaction for configuring a transmission resource of the small cell during the access is reduced, thereby realizing the purpose of enabling the terminal to access he transmission resource of the small cell as soon as possible so as to offload the terminal to the small cell as soon as possible, thus effectively economizing a resource of the macro cell.

Furthermore the information about the small cells may include frequency information of the small cells, and access resource configuration information of the small cells.

Here the information about the small cells may further include identity information of the small cells.

Further to any one of the embodiments above of the method, optionally the method may further include: broadcasting the information about the small cells in the macro cell at a fixed or non-fixed period.

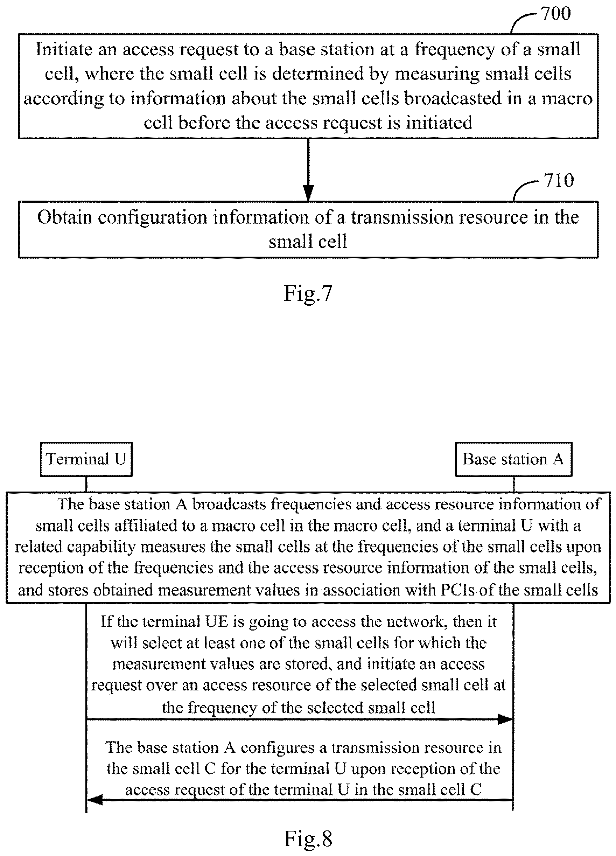

An embodiment of the invention provides a method for configuring a small cell resource in a wireless mobile network as illustrated in Fig.7, where the method includes the following operations.

Operation 700: initiating an access request to a base station at a frequency of a small cell, where the small cell is determined by measuring small cells according to information about the small cells broadcasted in a macro cell before the access request is initiated; and

Operation 710: obtaining configuration information of a transmission resource in the small cell.

In the technical solution according to the embodiment of the invention, since the information about the small cells is broadcasted in the macro cell, the terminal may measure the small cells according to the received information about the small cells before initiating the access request, instead of measuring during an access, thus signaling interactions for configuring a transmission resource of the small cell during the access are reduced, thereby realizing the purpose of enabling the terminal to access he transmission resource of the small cell as soon as possible so as to offload the terminal to the small cell as soon as possible, thus effectively economizing a resource of the macro cell.

Furthermore the information about the small cells may include frequency information of the small cells, and access resource configuration information of the small cells.

Here the information about the small cells may further include identity information of the small cells.

Further to any one of the embodiments above of the method, optionally the small cell is a small cell with the highest quality determined after measuring the small cells according to the information about the small cells broadcasted in the macro cell of the base station before the access request is initiated.

Further to any one of the embodiments above of the method, optionally the method may further include: receiving the information about the small cells broadcasted in the macro cell at a fixed or non-fixed period, and measuring the small cells according to the information about the small cells received each time, where the small cell is determined according to the latest measurement.

Still taking the network architecture illustrated in Fig.3 as an example, in order to enable the terminal to access a transmission resource of a small cell as soon as possible, Fig.8 illustrates a further embodiment thereof.

Where a base station A broadcasts frequencies and access resource information of small cells affiliated to a macro cell in the macro cell. Optionally, the PCIs of the small cells are also carried. In this embodiment, the information about the small cells may be carried in system information for broadcasting. In this embodiment, the information about all the small cells affiliated to the macro cell may be broadcasted, or a part of the small cells may be selected under a predetermined rule, and the information about these small cells may be transmitted.

A terminal U with a related capability measures the small cells at the frequencies of the small cells upon reception of the frequencies and the access resource information of the small cells, and stores obtained measurement values in association with PCIs of the small cells. In this embodiment, the terminal replaces the stored original measurement values of the same small cells after each measurement. In this embodiment, the terminal stores only the measurement values above a preset threshold.

If the terminal UE is going to access the network, then it will select at least one of the small cells for which the measurement values are stored, and initiate an access request over an access resource of the selected small cell at the frequency of the selected small cell. In this embodiment, the terminal U may select a small cell C with the highest quality to initiate an access request.

The base station A configures a transmission resource in the small cell C for the terminal U upon reception of the access request of the terminal U in the small cell C, where configuring the transmission resource includes deciding on the transmission resource and transmitting configuration information.

The terminal U may transmit data over the corresponding transmission resource upon reception of the configuration information of the transmission resource in the small cell C. For example, the terminal transmits data in a CA or COMP transmission and reception mode.

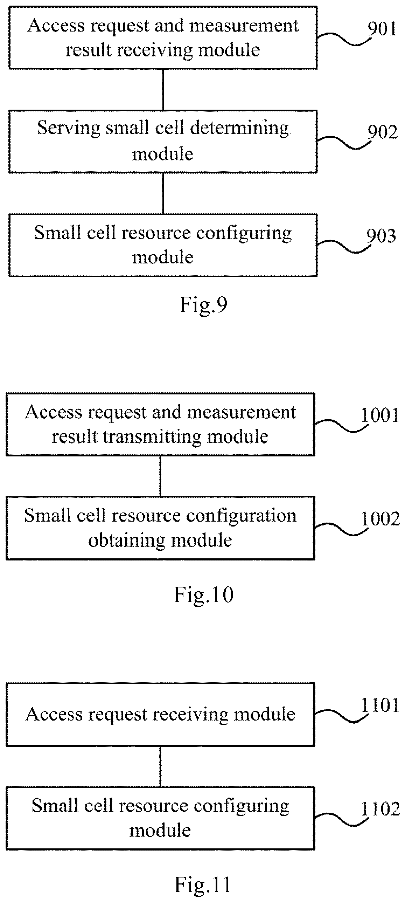

Based upon the same inventive idea as the method, an embodiment of the invention further provides an apparatus for configuring a small cell resource in a wireless mobile network as illustrated in Fig.9, where the apparatus includes: an access request and measurement result receiving module 901 configured to receive an access request initiated by a terminal, and a measurement result of small cells reported by the terminal, where the measurement result of the small cells is determined by the terminal by measuring the small cells according to information about the small cells broadcasted in a macro cell, before the terminal initiates the access request; a serving small cell determining module 902 configured to determine small cells for serving the terminal according to the measurement result of the small cells; and a small cell resource configuring module 903 is configured to configure transmission resources in the determined small cells for the terminal.

The apparatus according to this embodiment may be a base station, or may be a functional module or a hardware element in the base station.

In the technical solution according to the embodiment of the invention, since the information about the small cells is broadcasted in the macro cell, the terminal may measure the small cells according to the received information about the small cells before initiating the access request, instead of measuring during an access, thus signaling interactions for configuring a transmission resource of the small cell during the access are reduced, thereby realizing the purpose of enabling the terminal to access he transmission resource of the small cell as soon as possible so as to offload the terminal to the small cell as soon as possible, thus effectively economizing a resource of the macro cell.

Here the information about the small cells includes frequency information of the small cells.

Further to any one of the embodiments above of the apparatus, optionally the serving small cell determining module is configured to: select a predetermined number of small cells as the small cells for serving the terminal, in a descending order of qualities of the small cells indicated by the measurement result of the small cells; or select a predetermined number of small cells as the small cells for serving the terminal, according to qualities of the small cells indicated by the measurement result of the small cells, and positions of the small cells.

Further to any one of the embodiments above of the apparatus, optionally the apparatus further includes a broadcasted information transmitting module configured to: broadcast the information about the small cells in the macro cell at a fixed or non-fixed period.

Based upon the same inventive idea as the method, an embodiment of the invention further provides an apparatus for configuring a small cell resource in a wireless mobile network as illustrated in Fig. 10, where the apparatus includes: an access request and measurement result transmitting module 1001 configured to initiate an access request to a base station, and report a measurement result of small cells determined by measuring the small cells according to information about the small cells broadcasted by the base station in a macro cell before the access request is initiated; and a small cell resource configuration obtaining module 1002 configured to obtain configuration information of transmission resources in small cells for serving the terminal determined by the base station.

The apparatus according to this embodiment may be a terminal, or may be a functional module or a hardware element in the terminal.

In the technical solution according to the embodiment of the invention, since the information about the small cells is broadcasted in the macro cell, the terminal may measure the small cells according to the received information about the small cells before initiating the access request, instead of measuring during an access, thus signaling interactions for configuring a transmission resource of the small cell during the access are reduced, thereby realizing the purpose of enabling the terminal to access he transmission resource of the small cell as soon as possible so as to offload the terminal to the small cell as soon as possible, thus effectively economizing a resource of the macro cell.

Here the information about the small cells includes frequency information of the small cells.

Further to any one of the embodiments above of the apparatus, optionally the access request and measurement result transmitting module, configured to report to the base station of the macro cell the measurement result of the small cells obtained by measuring the small cells according to the information about the small cells broadcasted in the macro cell before the access request is initiated, is configured to: report to the base station of the macro cell information about a predetermined number of small cells selected in a descending order of qualities of the small cells, where the qualities of the small cells are indicated by the measurement result obtained by measuring the small cells according to the information about the small cells broadcasted in the macro cell before the access request is initiated; or report, to the base station of the macro cell, the measurement result of all the small cells obtained by measuring the small cells according to the information about the small cells broadcasted in the macro cell before the access request is initiated.

Further to any one of the embodiments above of the apparatus, optionally the apparatus further includes a broadcasted information receiving and measuring module configured to: receive the information about the small cells broadcasted in the macro cell at a fixed or non-fixed period, and measure the small cells according to the information about the small cells received each time, where what is reported is the measurement result of the latest measuring of the small cells.

Based upon the same inventive idea as the method, an embodiment of the invention further provides an apparatus for configuring a small cell resource in a wireless mobile network as illustrated in Fig.11, where the apparatus includes: an access request receiving module 1101 configured to receive an access request initiated by a terminal at a frequency of a small cell, where the small cell is determined by the terminal by measuring small cells according to information about the small cells broadcasted in a macro cell before the access request is initiated; and a small cell resource configuring module 1102 configured to configure a transmission resource in the small cell for the terminal.

The apparatus according to this embodiment may be a base station, or may be a functional module or a hardware element in the base station.

In the technical solution according to the embodiment of the invention, since the information about the small cells is broadcasted in the macro cell, the terminal may measure the small cells according to the received information about the small cells before initiating the access request, instead of measuring during an access, thus signaling interactions for configuring a transmission resource of the small cell during the access are reduced, thereby realizing the purpose of enabling the terminal to access he transmission resource of the small cell as soon as possible so as to offload the terminal to the small cell as soon as possible, thus effectively economizing the resource of the macro cell.

Furthermore the information about the small cells includes frequency information of the small cells, and access resource configuration information of the small cells.

Further to any one of the embodiments above of the apparatus, optionally the apparatus may further include a broadcasted information transmitting module configured to: broadcast the information about the small cells in the macro cell at a fixed or non-fixed period.

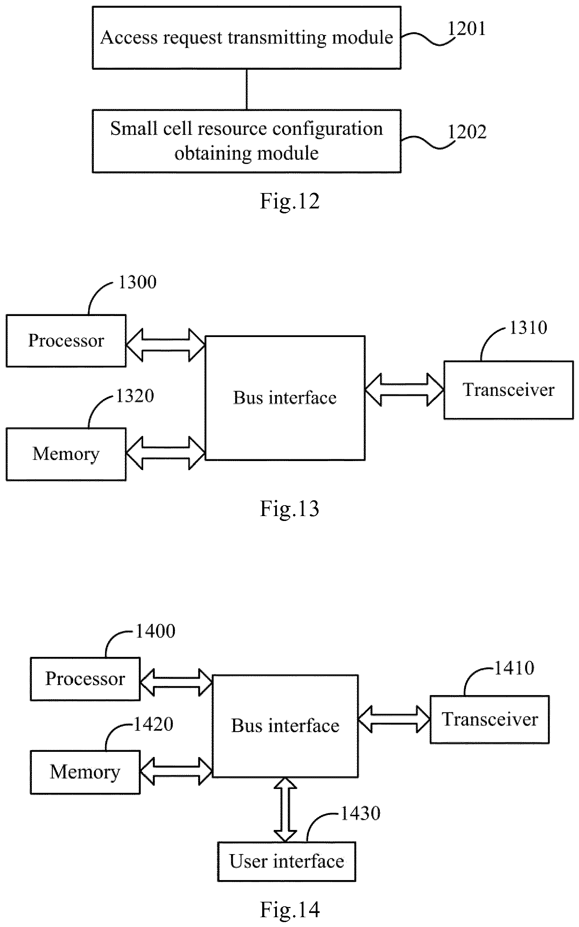

Based upon the same inventive idea as the method, an embodiment of the invention further provides an apparatus for configuring a small cell resource in a wireless mobile network as illustrated in Fig.12, where the apparatus includes: an access request transmitting module 1201 configured to initiate an access request to a base station at a frequency of a small cell, where the small cell is determined by the terminal by measuring small cells according to information about the small cells broadcasted in a macro cell before the access request is initiated; and a small cell resource configuration obtaining module 1202 configured to obtain configuration information of a transmission resource in the small cell.

The apparatus according to this embodiment may be a terminal, or may be a functional module or a hardware element in the terminal.

In the technical solution according to the embodiment of the invention, since the information about the small cells is broadcasted in the macro cell, the terminal may measure the small cells according to the received information about the small cells before initiating the access request, instead of measuring during an access, thus signaling interactions for configuring a transmission resource of the small cell during the access are reduced, thereby realizing the purpose of enabling the terminal to access he transmission resource of the small cell as soon as possible so as to offload the terminal to the small cell as soon as possible, thus effectively economizing a resource of the macro cell.

Furthermore the information about the small cells includes frequency information of the small cells, and access resource configuration information of the small cells.

Further to any one of the embodiments above of the apparatus, optionally the small cell is a small cell with the highest quality determined after measuring the small cells according to the information about the small cells broadcasted in the macro cell of the base station before the access request is initiated.

Further to any one of the embodiments above of the apparatus, optionally the apparatus further includes a broadcasted information receiving and measuring module configured to: receive the information about the small cells broadcasted in the macro cell at a fixed or non-fixed period, and measure the small cells according to the information about the small cells received each time, where the small cell is determined according to the latest measurement.

Based upon the same inventive idea as the method, an embodiment of the invention further provides a base station as illustrated in Fig.13, where the base station includes a processor 1300, a transceiver 1310, and a memory 1320.

Where the transceiver 1310 is configured to be controlled by the processor to receive and transmit data; and the memory 1320 is configured to store data used by the processor to perform operations.

Here in Fig.13, the bus architecture may include any number of interconnecting buses and bridges to specifically link together various circuits including one or more processors represented by the processor 1300, and one or more memories represented by the memory 1320. The bus architecture may further link together various other circuits, e.g., peripheral devices, manostats, power management circuits, etc., all of which are well known in the art, so a further description thereof will be omitted in this context. The bus interface serves as an interface. The transceiver 1310 may be a number of elements including a transmitter and a receiver which are units for communication with various other devices over a transmission medium. The processor 1300 is responsible for managing the bus architecture and performing normal processes, and the memory 1320 may store data used by the processor 1300 to perform the operations.

In one instance, the processor 1300 is configured to read programs from the memory 1320 to perform the following operations.

Receiving an access request initiated by a terminal, and a measurement result of small cells reported by the terminal, through the transceiver 1310, where the measurement result of the small cells is determined by the terminal by measuring the small cells according to information about the small cells broadcasted in a macro cell, before the terminal initiates the access request; determining small cells for serving the terminal, according to the measurement result of the small cells; and configuring transmission resources in the determined small cell for the terminal.

In another instance, the processor 1300 is configured to read programs from the memory 1320 to perform the following operations.

Receiving through the transceiver 1310 an access request initiated by a terminal at a frequency of a small cell, where the small cell is determined by the terminal by measuring small cells according to information about the small cells broadcasted in a macro cell before the access request is initiated; and configuring a transmission resource in the small cell for the terminal.

In the first instance, the information about the small cells includes frequency information of the small cells.

Further to any one of the embodiments above of the base station in the first instance, optionally the processor 1300 configured to read the programs from the memory 1320 to determine the small cells for serving the terminal according to the measurement result of the small cells is configured to: select a predetermined number of small cells as the small cells for serving the terminal, in a descending order of qualities of the small cells indicated by the measurement result of the small cells; or select a predetermined number of small cells as the small cells for serving the terminal, according to qualities of the small cells indicated by the measurement result of the small cells, and positions of the small cells.

Further to any one of the embodiments above of the base station in the first instance, optionally the processor 1300 is further configured to read the programs from the memory 1320 to perform: broadcasting the information about the small cells in the macro cell at a fixed or non-fixed period.

In the second instance, the information about the small cells includes frequency information of the small cells, and access resource configuration information of the small cells.

Further to any one of the embodiments above of the base station in the second instance, optionally the processor 1300 is further configured to read the programs from the memory 1320 to perform: broadcasting the information about the small cells in the macro cell at a fixed or non-fixed period through the transceiver 1310.

Based upon the same inventive idea as the method above, an embodiment of the invention further provides a terminal as illustrated in Fig.14, where the base station includes a processor 1400, a transceiver 1410, and a memory 1420.

Where the transceiver 1410 is configured to be controlled by the processor to receive and transmit data; and the memory 1420 is configured to store data used by the processor to perform operations.

Here in Fig.14, the bus architecture may include any number of interconnecting buses and bridges to specifically link together various circuits including one or more processors represented by the processor 1400, and one or more memories represented by the memory 1420. The bus architecture may further link together various other circuits, e.g., peripheral devices, manostats, power management circuits, etc., all of which are well known in the art, so a further description thereof will be omitted in this context. The bus interface serves as an interface. The transceiver 1410 may be a number of elements including a transmitter and a receiver which are units for communication with various other devices over a transmission medium. For different user equipments, the user interface 1430 may also be an interface via which external or internal devices may be connected as appropriate, where the connected devices include but will not be limited to a keypad, a display, a speaker, a microphone, a joystick, etc.

The processor 1400 is responsible for managing the bus architecture and performing normal processes, and the memory 1420 may store data used by the processor 1400 to perform the operations.

In one instance, the processor 1400 is configured to read programs from the memory 1420 to perform the following operations.

Initiating an access request to a base station, and reporting a measurement result of small cells determined by measuring the small cells according to information about the small cells broadcasted by the base station in a macro cell before the access request is initiated, through the transceiver 1410; and obtaining configuration information of transmission resources in small cells determined by the base station for serving the terminal, through the transceiver 1410.

In another instance, the processor 1400 is configured to read programs from the memory 1420 to perform the following operations.

Initiating through the transceiver 1410 an access request to a base station at a frequency of a small cell, where the small cell is determined by the terminal by measuring small cells according to information about the small cells broadcasted in a macro cell before the access request is initiated; and obtaining configuration information of a transmission resource in the small cell.

In the first instance, the information about the small cells includes frequency information of the small cells.

Further to any one of the embodiments above of the terminal in the first instance, optionally the processor configured to report to the base station of the macro cell the measurement result of the small cells determined by measuring the small cells according to the information about the small cells broadcasted in the macro cell before the access request is initiated, is configured to: report, to the base station through the transceiver, information about a predetermined number of small cells selected in a descending order of qualities of the small cells, where the qualities of the small cells are indicated by measurement values obtained by measuring the small cells according to the information about the small cells broadcasted in the macro cell before the access request is initiated; or report, to the base station through the transceiver, the measurement result of all the small cells determined by measuring the small cells according to the information about the small cells broadcasted in the macro cell before the access request is initiated.

Further to any one of the embodiments above of the terminal in the first instance, optionally the processor is further configured to read the programs from the memory to perform: receiving the information about the small cells broadcasted in the macro cell at a fixed or non-fixed period through the transceiver, and measuring the small cells according to the information about the small cells received each time, where what is reported is the measurement result of the latest measuring of the small cells.

In the second instance, the information about the small cells includes frequency information of the small cells, and access resource configuration information of the small cells.

Further to any one of the embodiments above of the terminal in the second instance, optionally the small cell is a small cell with the highest quality determined after measuring the small cells according to the information about the small cells broadcasted in the macro cell of the base station before the access request is initiated.

Further to any one of the embodiments above of the terminal in the second instance, optionally the processor is further configured to read the programs from the memory to perform: receiving the information about the small cells broadcasted in the macro cell at a fixed or non-fixed period, and measuring the small cells according to the information about the small cells received each time, where the small cell is determined according to the latest measurement.

In the embodiments of the invention, the base station may be a Base Transceiver Station (BTS), a Node B, an evolved Node B (eNode B or eNB), a Home Node B (HNB), an evolved Home eNode B (HeNB), a Relay node (RN), a radio Access Point (AP), a wireless router, or the like. The base station provides a specific coverage area of radio signals using one or more antennas, where the specific area is referred to as a cell. The concept of a cell also typically refers to a logic entity, including software and hardware sub-systems of the base station, to serve a user equipment in the specific overage area. One base station may be associated with one cell, and if the cell is subdivided into sectioned cells, then the base station may be associated with the sectioned cells.

The base station may alternatively be embodied as Base Band Units (BBUs), and Remote Radio Heads (RRHs) separate from the BBUs, where the BBUs may transmit signals with the RRHs over a long distance through optic fibers, and at this time the BBUs may be centralized to thereby support a CDMA Radio Access Network (C-RAN) architecture which may be further embodied through cloud computing over a general processor platform.

In a particular embodiment, the terminal may be a mobile phone, a tablet computer, a notebook computer, a data card, a net-book computer, a smart watch, a wireless broadband hotspot router (MiFi), and a digital camera, a smart electricity meter, a home appliance, or another product capable of wireless communication. The terminal may communicate wirelessly with the various types of base stations using one or more radio access technologies.

A radio communication signal is transmitted between the terminal and the base station using the Multiple Input Multiple Output (MIMO) technology, and the terminal and the base station may be provided with different numbers of antennas dependent upon their different configurations, where the number of antennas may be the number of physical antennas, or may be the number of logic antenna ports. The MIMO technology may be configured to support a variety of antenna transmission modes of pre-coding, beam-forming, transmit diversity, spatial multiplexing, etc., or may be switched dynamically between the modes according to a channel condition. The MIMO technology may be further categorized into Single user-MIMO (SU-MIMO) and Multiple User-MIMO (MU-MIMO), where user equipments in MU-MIMO may be user equipments residing in different cells, and the base station at this time may be one or more base stations associated with the respective cells.

The base station may provide a coverage area of a macro cell, a micro cell, a pico cell, and a femto cell according to the size of the provided coverage area of radio signals. The base station operating with the Long Term Evolution (LTE) or Long Term Evolution-Advanced (LTE-A) radio access technology may communicate with another base station via an X2 interface to form a Radio Access Network (RAN), and the base station may communicate with a core network via an S1 interface.

Those skilled in the art shall appreciate that the embodiments of the invention may be embodied as a method, a system or a computer program product. Therefore the invention may be embodied in the form of an all-hardware embodiment, an all-software embodiment or an embodiment of software and hardware in combination. Furthermore the invention may be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram may be embodied in computer program instructions. These computer program instructions may be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions may also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions may also be loaded onto the computer or the other programmable data processing device so that a series of operational operations are performed on the computer or the other programmable data processing device to create a computer implemented process so that the instructions executed on the computer or the other programmable device provide operations for performing the functions specified in the flow(s) of the flow chart and/or the block(s) of the block diagram.

Although the preferred embodiments of the invention have been described, those skilled in the art benefiting from the underlying inventive concept may make additional modifications and variations to these embodiments. Therefore the appended claims are intended to be construed as encompassing the preferred embodiments and all the modifications and variations coming into the scope of the invention.

Evidently those skilled in the art may make various modifications and variations to the invention without departing from the spirit and scope of the invention. Thus the invention is also intended to encompass these modifications and variations thereto so long as the modifications and variations come into the scope of the claims appended to the invention and their equivalents.

## Claims

1. A method for configuring a small cell resource in a wireless mobile network, the method comprising:
receiving an access request initiated by a terminal, and a measurement result of small cells reported by the terminal, wherein the measurement result of the small cells is determined by the terminal by measuring the small cells according to information about the small cells broadcasted in a macro cell, before the terminal initiates the access request;
determining small cells for serving the terminal according to the measurement result of the small cells; and
configuring transmission resources in the determined small cells for the terminal.

2. The method according to claim 1, wherein the information about the small cells comprises one or any combination of: frequency information of the small cells, identity information of the small cells, and access resource configuration information of the small cells.

3. The method according to claim 1 or 2, wherein the determining the small cells for serving the terminal according to the measurement result of the small cells comprises:
selecting a predetermined number of small cells as the small cells for serving the terminal, in a descending order of qualities of the small cells indicated by the measurement result of the small cells; or
selecting a predetermined number of small cells as the small cells for serving the terminal, according to qualities of the small cells indicated by the measurement result of the small cells, and positions of the small cells.

4. The method according to claim 1 or 2, wherein the method further comprises:
broadcasting the information about the small cells in the macro cell at a fixed or non-fixed period.

5. A method for configuring a small cell resource in a wireless mobile network, the method comprising:
initiating an access request to a base station, and reporting a measurement result of small cells determined by measuring the small cells according to information about the small cells broadcasted by the base station in a macro cell before the access request is initiated; and
obtaining configuration information of transmission resources in small cells for serving the terminal determined by the base station.

6. The method according to claim 5, wherein the information about the small cells comprises one or any combination of: frequency information of the small cells, identity information of the small cells, and access resource configuration information of the small cells.

7. The method according to claim 5 or 6, wherein the reporting to the base station the measurement result of the small cells determined by measuring the small cells according to the information about the small cells broadcasted in the macro cell before the access request is initiated comprises:
reporting, to the base station, information about a predetermined number of small cells selected in a descending order of qualities of the small cells, wherein the qualities of the small cells are indicated by the measurement result obtained by measuring the small cells according to the information about the small cells broadcasted in the macro cell before the access request is initiated; or
reporting, to the base station, the measurement result of all the small cells determined by measuring the small cells according to the information about the small cells broadcasted in the macro cell before the access request is initiated.

8. The method according to claim 5 or 6, wherein the method further comprises:
receiving the information about the small cells broadcasted in the macro cell at a fixed or non-fixed period, and measuring the small cells according to the information about the small cells received each time, wherein what is reported is a measurement result of a latest measuring of the small cells.

9. A method for configuring a small cell resource in a wireless mobile network, the method comprising:
receiving an access request initiated by a terminal at a frequency of a small cell, wherein the small cell is determined by the terminal by measuring small cells according to information about the small cells broadcasted in a macro cell before the access request is initiated; and
configuring a transmission resource in the small cell for the terminal.

10. The method according to claim 9, wherein the information about the small cells comprises one or any combination of: frequency information of the small cells, identity information of the small cells, and access resource configuration information of the small cells.

11. The method according to claim 9 or 10, wherein the method further comprises:
broadcasting the information about the small cells in the macro cell at a fixed or non-fixed period.

12. A method for configuring a small cell resource in a wireless mobile network, the method comprising:
initiating an access request to a base station at a frequency of a small cell, wherein the small cell is determined by measuring small cells according to information about the small cells broadcasted in a macro cell before the access request is initiated; and
obtaining configuration information of a transmission resource in the small cell.

13. The method according to claim 12, wherein the information about the small cells comprises one or any combination of: frequency information of the small cells, identity information of the small cells, and access resource configuration information of the small cells.

14. The method according to claim 12 or 13, wherein the small cell is a small cell with a highest quality determined after measuring the small cells according to the information about the small cells broadcasted in the macro cell of the base station before the access request is initiated.

15. The method according to claim 12 or 13, wherein the method further comprises:
receiving the information about the small cells broadcasted in the macro cell at a fixed or non-fixed period, and measuring the small cells according to the information about the small cells received each time, wherein the small cell is determined according to a latest measurement.

16. An apparatus for configuring a small cell resource in a wireless mobile network, the apparatus comprising:
an access request and measurement result receiving module configured to receive an access request initiated by a terminal, and a measurement result of small cells reported by the terminal, wherein the measurement result of the small cells is determined by the terminal by measuring the small cells according to information about the small cells broadcasted in a macro cell, before the terminal initiates the access request;
a serving small cell determining module configured to determine small cells for serving the terminal according to the measurement result of the small cells; and
a small cell resource configuring module configured to configure transmission resources in the determined small cells for the terminal.

17. The apparatus according to claim 16, wherein the information about the small cells comprises one or any combination of: frequency information of the small cells, identity information of the small cells, and access resource configuration information of the small cells.

18. The apparatus according to claim 16 or 17, wherein the serving small cell determining module is configured to:
select a predetermined number of small cells as the small cells for serving the terminal, in a descending order of qualities of the small cells indicated by the measurement result of the small cells; or
select a predetermined number of small cells as the small cells for serving the terminal, according to qualities of the small cells indicated by the measurement result of the small cells, and positions of the small cells.

19. The apparatus according to claim 16 or 17, wherein the apparatus further comprises a broadcasted information transmitting module configured to:
broadcast the information about the small cells in the macro cell at a fixed or non-fixed period.

20. An apparatus for configuring a small cell resource in a wireless mobile network, the apparatus comprising:
an access request and measurement result transmitting module configured to initiate an access request to a base station, and report a measurement result of small cells determined by measuring the small cells according to information about the small cells broadcasted by the base station in a macro cell before the access request is initiated; and
a small cell resource configuration obtaining module configured to obtain configuration information of a transmission resource in a small cell for serving the terminal determined by the base station.

21. The apparatus according to claim 20, wherein the information about the small cells comprises one or any combination of: frequency information of the small cells, identity information of the small cells, and access resource configuration information of the small cells.

22. The apparatus according to claim 20 or 21, wherein the access request and measurement result transmitting module configured to report to the base station the measurement result of the small cells determined by measuring the small cells according to the information about the small cells broadcasted in the macro cell before the access request is initiated is configured to:
report, to the base station, information about a predetermined number of small cells selected in a descending order of qualities of the small cells, wherein the qualities of the small cells are indicated by the measurement result obtained by measuring the small cells according to the information about the small cells broadcasted in the macro cell before the access request is initiated; or
report, to the base station, the measurement result of all the small cells determined by measuring the small cells according to the information about the small cells broadcasted in the macro cell before the access request is initiated.

23. The apparatus according to claim 20 or 21, wherein the apparatus further comprises a broadcasted information receiving and measuring module configured to:
receive the information about the small cells broadcasted in the macro cell at a fixed or non-fixed period, and measure the small cells according to the information about the small cells received each time, wherein what is reported is a measurement result of a latest measuring of the small cells.

24. An apparatus for configuring a small cell resource in a wireless mobile network, the apparatus comprising:
an access request receiving module configured to receive an access request initiated by a terminal at a frequency of a small cell, wherein the small cell is determined by the terminal by measuring small cells according to information about the small cells broadcasted in a macro cell before the access request is initiated; and
a small cell resource configuring module configured to configure a transmission resource in the small cell for the terminal.

25. The apparatus according to claim 24, wherein the information about the small cells comprises one or any combination of: frequency information of the small cells, identity information of the small cells, and access resource configuration information of the small cells.

26. The apparatus according to claim 24 or 25, wherein the apparatus further comprises a broadcasted information transmitting module configured to:
broadcast the information about the small cells in the macro cell at a fixed or non-fixed period.

27. An apparatus for configuring a small cell resource in a wireless mobile network, the apparatus comprising:
an access request transmitting module configured to initiate an access request to a base station at a frequency of a small cell, wherein the small cell is determined by measuring small cells according to information about the small cells broadcasted in a macro cell before the access request is initiated; and
a small cell resource configuration obtaining module configured to obtain configuration information of a transmission resource in the small cell.

28. The apparatus according to claim 27, wherein the information about the small cells comprises one or any combination of: frequency information of the small cells, identity information of the small cells, and access resource configuration information of the small cells.

29. The apparatus according to claim 27 or 28, wherein the small cell is a small cell with a highest quality determined after measuring the small cells according to the information about the small cells broadcasted in the macro cell of the base station before the access request is initiated.

30. The apparatus according to claim 27 or 28, wherein the apparatus further comprises a broadcasted information receiving and measuring module configured to:
receive the information about the small cells broadcasted in the macro cell at a fixed or non-fixed period, and measure the small cells according to the information about the small cells received each time, wherein the small cell is determined according to a latest measurement.

31. A base station, comprising a processor, a memory, and a transceiver, wherein:
the processor is configured to read programs in the memory to:
receive an access request initiated by a terminal, and a measurement result of small cells reported by the terminal, through the transceiver, wherein the measurement result of the small cells is determined by the terminal by measuring the small cells according to information about the small cells broadcasted in a macro cell, before the terminal initiates the access request;
determine small cells for serving the terminal according to the measurement result of the small cells; and
configure transmission resources in the determined small cells for the terminal;
the transceiver is configured to be controlled by the processor to receive and transmit data; and
the memory is configured to store data used by the processor to perform operations.

32. A terminal, comprising a processor, a memory, and a transceiver, wherein:
the processor is configured to read programs in the memory to:
initiate an access request to a base station, and report a measurement result of small cells determined by measuring the small cells according to information about the small cells broadcasted by the base station in a macro cell before the access request is initiated, through the transceiver; and
obtain configuration information of a transmission resource in a small cell for serving the terminal determined by the base station, through the transceiver;
the transceiver is configured to be controlled by the processor to receive and transmit data; and
the memory is configured to store data used by the processor to perform operations.

33. A base station, comprising a processor, a memory, and a transceiver, wherein:
the processor is configured to read programs in the memory to:
receive through the transceiver an access request initiated by a terminal at a frequency of a small cell, wherein the small cell is determined by the terminal by measuring small cells according to information about the small cells broadcasted in a macro cell before the access request is initiated; and
configure a transmission resource in the small cell for the terminal; and
the transceiver is configured to be controlled by the processor to receive and transmit data; and
the memory is configured to store data used by the processor to perform operations.

34. A terminal, comprising a processor, a memory, and a transceiver, wherein:
the processor is configured to read programs in the memory to:
initiate through the transceiver an access request to a base station at a frequency of a small cell, where the small cell is determined by measuring small cells according to information about the small cells broadcasted in a macro cell before the access request is initiated; and
obtain configuration information of a transmission resource in the small cell;
the transceiver is configured to be controlled by the processor to receive and transmit data; and
the memory is configured to store data for use by the processor in performing operations.
